# FASCICULE DE BREVET EUROPEEN

(11) **EP 0 818 418 B1**
(45) Date de publication et mention de la délivrance du brevet: **07.06.2000**
(21) Numéro de dépôt: 97401546.3
(22) Date de dépôt: 01.07.1997
(51) Int. Cl.: C01B 39/22

(54) **Utilisation d'un réacteur agité par un système du type vis d'Archimède pour la synthèse de faujasite lsx**
Verwendung eines Reaktors mit einem archimedischen Schraubenrührwerk zur Herstellung von Faujasit LSX
Use of a reactor agitated by a screw-type system for the synthesis of faujasite lsx

(30) Priorité: 12.07.1996 FR 9608781
(43) Date de publication de la demande: 14.01.1998
(73) Titulaire: CECA S.A., 92800 Puteaux (FR)
(72) Inventeur: Masini, Jean-Jacques, 78170 La Celle-Saint-Cloud (FR); Plee, Dominique, 64320 Bizanos (FR)
(74) Mandataire: Haicour, Philippe

(56) Documents cités:
- WO-A-96/02462
- FR-A- 2 357 482

## Description

La présente invention a trait à la fabrication industrielle de zéolites, plus précisément de faujasites à basse teneur en silice.

On rappelle ici que les faujasites constituent un groupe d'espèces minérales caractérisées par leur structure topographique cristallographique, dont on peut trouver un excellent exposé dans l'ouvrage de Donald W. Breck "Zeolite Molecular Sieves", éditions John Wiley and Sons, 1974 - p. 92 et suivantes. La règle dite de Löwenstein leur impose un Si/Al supérieur, ou tout au moins égal à 1. On a coutume de distinguer :
■ les faujasites X avec Si/AI < 1,5,
■ les faujasites Y avec Si/AI > 1,5.

Les faujasites X classiques sont de rapport Si/Al ≥ 1,2. Les caractéristiques physiques des faujasites (capacité d'échange, adsorption d'azote, etc...) évoluent en fonction du rapport Si/AI. On s'intéresse ici aux faujasites avec un rapport Si/Al égal à 1, que l'on nomme faujasites LSX (en anglais Low Silica X faujasites), parce que toutes les faujasites envisageables, ce sont celles qui possèdent le maximum possible d'ions aluminium tétraédriques par maille cristalline et que de ce fait, elles disposent potentiellement du plus grand nombre de sites d'adsorption pour des molécules très variées comme CO₂, N₂, etc. Il faut préciser qu'au sens de la présente invention, on entend par faujasite LSX une espèce zéolitique dont on mesure un rapport Si/AI = 1 ± 0,05, dont les valeurs inférieures à l'unité traduisent les incertitudes analytiques sur la mesure de ce rapport, et les valeurs supérieures, soit la même incertitude analytique, soit un écart tolérable de pureté du produit.

Le processus de synthèse des faujasites comprend deux étapes distinctes, la première (mûrissement) dans laquelle apparaissent des germes précurseurs, la seconde (cristallisation) qui est une phase de croissance de cristaux à partir de ces germes. Le déroulement de ces étapes dépend de nombreux facteurs physiques et chimiques qui ne sont pas tous bien compris. De toute façon, les conditions du milieu déterminent le type des germes formés et par conséquent, le type de zéolite. Ce que l'on sait en tous cas, c'est que les difficultés de la synthèse des faujasites augmentent quand diminue leur rapport Si/AI, et que les méthodes traditionnelles échouent pour la préparation à grande échelle des faujasites de rapport Si/AI = 1 qui sont l'objet de la présente invention. En particulier, à partir d'un milieu purement sodique, on obtient la zéolite NaA, et il est nécessaire d'introduire une certaine quantité d'ions potassium pour synthétiser la structure faujasite ; il est reconnu que celle-ci peut être obtenue pour des rapports Na/Na + K dans le gel de synthèse compris entre 0,7 et 0,8. La synthèse de telles zéolites à bas rapport Si/AI a été décrite dans le brevet français n° 2357482.

D'une façon très générale, on prépare les zéolites par cristallisation de compositions aqueuses silicoalumineuses formées par un mélange de solutions d'aluminates alcalins et de silicate de sodium à une température comprise entre l'ambiante et une température inférieure à leur température d'ébullition. En ce qui concerne les conditions d'agitation de ces milieux, on est partagé entre deux impératifs contradictoires. L'un est d'agiter pour favoriser les échanges de matière et de chaleur et éviter la synérèse des cristaux en formation. L'autre est au contraire de ne pas agiter ; on a en effet pu constater que dans la synthèse des faujasites, l'agitation conduisait, systématiquement, à certains désordres, en particulier un défaut de cristallinité de la zéolite, qui a été signalé par R.M. Barrer (cf. Hydrothermal Chemistry of Zeolites, Academic Press, 1982, p. 171). On peut aussi observer, indépendamment d'une insuffisance de cristallinité, l'apparition de phases parasites ; ces phases se forment par suite de la destruction sous l'effet de l'agitation, de certains germes instables. On pense que dans ces cas, les cisaillements locaux peuvent favoriser l'apparition de certains germes et la disparition de certains autres (voir par exemple D.E.W. Vaughan, Chem. Eng. Prog., 48(2), 1988, 25-31). En pratique, pour la fabrication industrielle de la LSX, on s'inspire de l'enseignement de G.H. Kühl (Zeolites, Sept. 1987, vol.7, 451-457) et l'on s'abstient d'agiter, se résignant à des durées de mûrissement et de cristallisation longues et donc très insatisfaisantes au plan de la rentabilité industrielle.

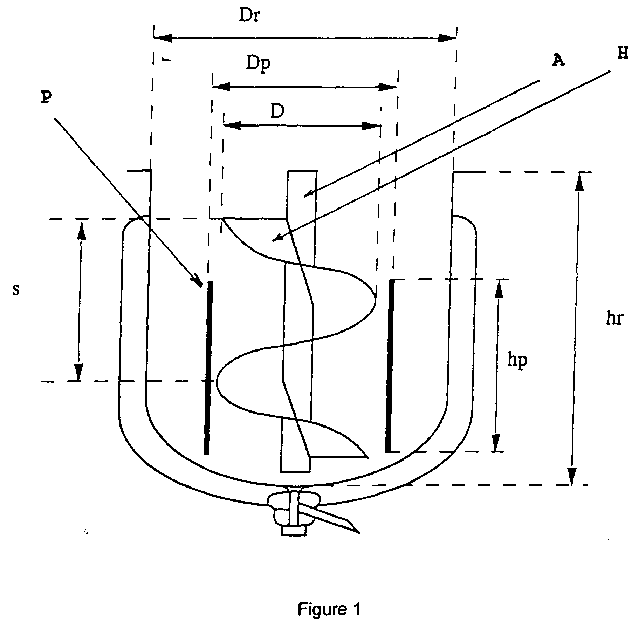

On vient de constater que l'on pouvait considérablement améliorer les conditions de fabrication des LSX en utilisant comme moyen d'agitation une vis d'Archimède, un dispositif bien connu de l'homme de l'art, dont on trouve par exemple la citation dans "Ullmann's Encyclopedia of Industrial Chemistry", VCH 1988, vol. B2, p.25-5. C'est un dispositif d'agitation comme représenté sur la figure 1, constitué pour sa partie mobile d'un axe vertical (A) autour duquel est enroulé un ruban hélicoïdal (H) de pas (s) et pour sa partie fixe, d'une paroi cylindrique (P) ouverte à ses deux extrémités formant tube de guidage circoncentrique à l'enveloppe du ruban et de diamètre (Dp). Le ruban hélicoïdal s'inscrit dans un cylindre de révolution de diamètre (D). L'agitateur à vis d'Archimède est logé dans un réacteur (R) de diamètre (Dr) et de hauteur (hr). Le tube de guidage plonge entièrement dans le gel. Pour permettre la circulation des flux dans le réacteur, la hauteur du tube de guidage (hp) est inférieure à la hauteur de remplissage du réacteur. De préférence, ces deux hauteurs sont dans un rapport inférieur à 0,95. Le tube de guidage est lui-même plus court que le ruban de façon à ce que celui-ci, dans sa rotation, puisse entraîner le gel du haut vers le bas du réacteur. Pour son bon fonctionnement, on recommande un dessin de l'appareillage dans lequel on se tient approximativement aux relations :
■ 0,3 Dr ≤ Dp ≤ 0,9 Dr,
   préférentiellement 0,4 Dr ≤ Dp ≤ 0,99 Dr
■ 0,3 Dr ≤ D ≤ 0,9,
   préférentiellement D ∼ 0,55 Dr
■ s ∼ D

Les vitesses d'agitation sont lentes ; elles varient de quelques tours à quelques dizaines de tours par minute. Elles sont choisies selon des critères habituels à l'homme du métier (rapidité des échanges de chaleur et de matière, limitation de l'effet de décantation, rhéologie du milieu), de façon à ce que le dispositif n'impose pas au gel un cisaillement moyen dans la cuve supérieur à 25 secondes réciproques.

Avec un tel dispositif, on procède avantageusement à la synthèse de faujasites LSX en opérant avec des gels dont la composition initiale en alumine, silice, soude et potasse est telle que l'on ait, en rapports molaires :
■ Na₂O/(Na₂O + K₂O) de 0,7 à 0,8
■ H₂O/Al₂O₃ de 91 à 130
■ SiO₂/Al₂O₃ de 1,8 à 2,2
■ (Na₂O + K₂O)/Al₂O₃ de 5,5 à 8.

On limite ainsi considérablement la durée globale du processus de fabrication industrielle, avec des mûrissements entre 30 et 60°C environ se déroulant sur des durées de 10 à 40 heures, et des cristallisations à 50-100°C durant 1 à 5 heures. Différentes combinaisons de ces étapes de mûrissement et cristallisation sont possibles, qui appartiennent à la présente invention.

### Exemple 1 : Synthèse de zéolite LSX à l'échelle du laboratoire.

Préparation du gel :
*Solution d'aluminate de sodium et de potassium :*
■ eau déminéralisée : 350 g
■ lessive de soude à 50 % : 638 g
■ lessive de potasse à 50 % : 340 g

On porte cette solution à 115°C et on ajoute :
■ alumine hydratée (type gibbsite) 146 g

Après dissolution et refroidissement, on ajoute l'eau perdue par évaporation.
*Solution de silicate de sodium :*
■ eau déminéralisée : 880 g
■ silicate de sodium : 440 g

Dans un réacteur de 2,5 litres, on mélange les deux solutions au moyen d'une turbine défloculeuse à 2000 tours/minute pendant 5 minutes pour obtenir un gel homogène. Cette composition correspond à la stoechiométrie suivante :
4,87 Na₂O : 1,63 K₂O : 2 Si2O : 1 Al₂O₃ : 130 H₂O

Après mélange des réactifs, silicate de soude et aluminate sodico-potassique, on laisse le gel mûrir 20 heures à 50°C, puis on opère la cristallisation de 4 heures à 95°C, mûrissement et cristallisation étant effectués dans diverses conditions d'agitation relatées au tableau ci-après.

Les résultats obtenus sont exprimés en valeurs de cristallinité mesurées par la capacité d'adsorption de toluène à 25°C sous pression partielle de 0,5, rapportées à une faujasite de capacité d'adsorption de toluène égale à 24 %, prise pour référence à 100 % de cristallinité.

| **Mode d'agitation (mûrissement cristallisation)** | **Température et durée du mûrissement** | **Température et durée de cristallisation** | **Cristallinité par rapport à la référence** |
|---|---|---|---|
| Statique | 50°C/20h | 95°C/4h | 95 % |
| Vis d'Archimède (50 t/min) | 50°C/20h | 95°C/4h | 97 % |
| Barreau magnétique | 50°C/20h | 95°C/4h | 65 % |
| Hélice MIXEL TT | 50°C/20h | 95°C/4h | 80 % |

On constate que :
■ le passage de la synthèse du milieu statique à un milieu dynamique provoque une perte de cristallinité dépendant du type d'agitateur. L'utilisation de la vis d'Archimède comme outil de mélange permet de conserver une cristallinité optimale, tout en assurant un transfert de chaleur et de matière efficace ;
■ la composition moyenne anhydre des cristaux s'établit à :
   (0,75 - 0,77) Na₂O/(0,23 - 0,25) K₂O/(1,9 - 2,1) SiO₂/1 Al₂O₃
   Elle n'est pas sensiblement différente suivant que la LSX est synthétisée en réacteur dynamique ou en milieu statique ;
■ la taille moyenne des cristaux et la distribution granulométrique déterminée par microscopie électronique à balayage (MEB) ne sont pas différentes (diamètre médian d'environ 6 µm).

### Exemple 1 bis : altération de l'indice de toluène avec l'augmentation de la vitesse d'agitation.

On reproduit les conditions de l'exemple précédent, à la différence près que le gel est soumis à l'agitation permanente engendrée de l'agitateur à vis d'Archimède pendant la période de mûrissement tournant à des vitesses différentes et engendrant les taux de cisaillement correspondant rapportés au tableau. Le produit final est testé par sa capacité d'adsorption de toluène sous pression partielle de 0,5 à la température de 25°C.

| **Vitesse d'agitation (t/min)** | **Taux de cisaillement (s**^{**-1**}**)** | **Indice de toluène de la LSX (%)** |
|---|---|---|
| 50 | ∼25 | 22,3 |
| 100 | ∼50 | 22,1 |
| 200 | ∼100 | 21,4 |

Ces résultats témoignent de la dégradation régulière de la LSX avec l'augmentation de la vitesse d'agitation au cours du mûrissement.

### Exemple 2 : synthèse de zéolite LSX à l'échelle industrielle

Préparation des réactifs : les réactifs sont préparés comme dans l'exemple 1, les chiffres précédemment exprimés en grammes étant maintenant exprimés en kilogrammes.

On verse la solution d'aluminate dans un réacteur de 3 m³, on lui ajoute, en mélangeant, la solution de silicate, opération au cours de laquelle le mélange reste tout d'abord limpide (environ 2 minutes), puis commence à se gélifier. On poursuit l'agitation durant 5 minutes supplémentaires.

Les conditions de mûrissement et de cristallisation et les résultats obtenus sont résumés dans le tableau ci-dessous.

| **Mode d'agitation (mûrissement cristallisation)** | **Température et durée du mûrissement** | **Température et durée de cristallisation** | **Cristallinité par rapport à la référence** |
|---|---|---|---|
| Statique | 50°C/20h | 95°C/4h | 80 % |
| Statique | 50°C/48h | 95°C/4h | 95 % |
| Statique | 50°C/70h | 95°C/4h | 100 % |
| Vis d'Archimède | 50°C/20h | 95°C/4h | 97 % |
| Hélice d'avion | 50°C/20h | 95°C/4h | 60 % |
| Hélice d'avion | 50°C/48h | 95°C/4h | 63 % |

On constate que :
■ l'utilisation d'un agitateur classique (type "hélice d'avion") ne permet pas d'obtenir un produit de bonne cristallinité ;
■ l'opération industrielle en statique est beaucoup plus lente qu'à l'échelle de laboratoire ; le gel subit une synérèse importante, ce qui va à l'encontre d'un contact intime des réactifs et peut expliquer l'allongement de la durée de mûrissement ;
■ la vis d'Archimède permet de conserver les durées de synthèse obtenues en laboratoire pour une qualité de LSX très comparable (granulométrie, composition chimique et cristallinité).

## Revendications

1. Procédé pour la fabrication d'une faujasite de type LSX par mûrissement et cristallisation d'un gel dont la composition molaire répond aux conditions suivantes :
■ Na₂O/(Na₂O + K₂O) de 0,7 à 0,8
■ H₂O/Al₂O₃ de 91 à 130
■ SiO₂/Al₂O₃ de 1,8 à 2,2
■ (Na₂O + K₂O)/Al₂O₃ de 5,5 à 8.
caractérisé en ce que pendant son mûrissement et sa cristallisation, le gel est agité à l'aide d'un agitateur à vis d'Archimède.

2. Procédé selon la revendication 1, caractérisé en ce que le cisaillement engendré dans le gel par la vis d'Archimède est inférieur à 25 s⁻¹.

3. Procédé selon la revendication 1 dans lequel le mûrissement se déroule de 10 à 40 heures à des températures de 30 à 60°C et la cristallisation se déroule durant 1 à 5 heures à des températures de 50 à 100°C.

## Patentansprüche

1. Verfahren zur Herstellung eines Faujasits vom LSX-Typ durch Reifung und Kristallisation eines Gels, dessen molare Zusammensetzung den folgenden Bedingungen entspricht:
• Na₂O/(Na₂O + K₂O) von 0,7 bis 0,8
• H₂O/Al₂O₃ von 91 bis 130
• SiO₂/Al₂O₃ von 1,8 bis 2,2
• (Na₂O + K₂O)/Al₂O₃ von 5,5 bis 8.
dadurch gekennzeichnet, daß das Gel während der Reifung und Kristallisation mit Hilfe eines Rührers mit einer archimedischen Schraube gerührt wird.

2. Verfahren nach Anspruch 1, dadurch gekennzeichnet, daß die im Gel durch die archimedische Schraube erzeugte Scherwirkung kleiner als 25 s⁻¹ ist.

3. Verfahren nach Anspruch 1, wobei die Reifung innerhalb von 10 bis 40 Stunden bei Temperaturen von 30 bis 60°C und die Kristallisation innerhalb von 1 bis 5 Stunden bei Temperaturen von 50 bis 100°C ablaufen.

## Claims

1. Process for the manufacture of a faujasite of LSX type by maturing and crystallization of a gel whose molar composition corresponds to the following conditions:
- Na₂O/(Na₂O + K₂O) from 0.7 to 0.8
- H₂O/Al₂O₃ from 91 to 130
- SiO₂/Al₂O₃ from 1.8 to 2.2
- (Na₂O + K₂O)/Al₂O₃ from 5.5 to 8.
characterized in that during its maturing and its crystallization the gel is stirred with the aid of an Archimedes' screw stirrer.

2. Process according to Claim 1, characterized in that the shear produced in the gel by the Archimedes' screw is lower than 25 s⁻¹.

3. Process according to Claim 1, in which the maturing takes place from 10 to 40 hours at temperatures of 30 to 60°C and the crystallization takes place for 1 to 5 hours at temperatures of 50 to 100°C.
